# FASCICULE DE BREVET EUROPEEN

(11) **EP 0 809 830 B1**
(45) Date de publication et mention de la délivrance du brevet: **06.05.1999**
(21) Numéro de dépôt: 95909830.2
(22) Date de dépôt: 15.02.1995
(51) Int. Cl.: G06F 17/30, G06F 3/033

(54) **PROCEDE POUR CONSULTER DES INFORMATIONS RECUES D'UN SERVEUR, ET TERMINAL METTANT EN OEUVRE CE PROCEDE**
VERFAHREN ZUM KONSULTIEREN VON AUS EINEM SERVER EMPFANGENEN INFORMATIONEN UND TERMINAL ZUM AUSFÜHREN DIESES VERFAHRENS
METHOD FOR ACCESSING DATA RECEIVED FROM A SERVER, AND TERMINAL USING SAME

(43) Date de publication de la demande: 03.12.1997
(73) Titulaire: QUESTEL, 92029 Nanterre (FR)
(72) Inventeur: MENARD, Arnaud, F-75015 Paris (FR); SPINELLI, Olivier, F-78800 Houilles (FR)
(74) Mandataire: Pontet, Bernard
(86) Numéro de dépôt international: FR9500177
(87) Numéro de publication internationale: WO9625714

(56) Documents cités:
- EP-A- 0 523 700
- EP-A- 0 536 077
- EP-A- 0 627 691
- IBM TECHNICAL DISCLOSURE BULLETIN, vol. 31, no. 3, Août 1988 NEW YORK, US, pages 30-31, ANONYMOUS 'Conversion of Structured Documents for Filing'

## Description

La présente invention concerne un procédé pour consulter des informations reçues d'un serveur. Elle vise également un terminal mettant en oeuvre ce procédé.

La consultation des résultats d'une session d'interrogation d'une base de donnée gérée par un serveur peut s'avérer longue et fastidieuse sur un terminal, lorsqu'avec les procédés de consultation actuels, il est généralement nécessaire de faire défiler sur l'écran du terminal de consultation une succession d'informations capturées au cours de la session. Ces informations incluent en vrac des messages d'invite émis par le serveur, des requêtes formulées par l'utilisateur du terminal, et des résultats ou informations reçues en réponse à ces requêtes. L'utilisateur doit alors chercher au sein de cet ensemble de données, les informations utiles et assurer lui-même le filtrage et éventuellement l'élimination de messages opérationnels devenus inutiles.

Le document EP-A-0 523 700 divulgue un procédé de consultation d'informations dans lequel la liste des requêtes et les résultats sont visualisés dans plusieurs fenêtres indépendantes.

Le but de l'invention est de remédier à ces inconvénients en proposant un procédé pour consulter des informations reçues d'au moins un serveur, en réponse à des requêtes transmises à ce serveur depuis un terminal, qui fournisse à l'utilisateur d'un terminal une plus grande facilité d'accès sélectif à des informations reçues, procurant ainsi un gain de temps et d'efficacité dans les recherches sur bases de données.

Suivant l'invention, le procédé de consultation comprenant, au cours de chaque session de communication, une étape pour capturer et stocker cumulativement des échanges d'information entre le serveur et le terminal, ces échanges d'information comprenant des messages d'invite émis par le serveur et reçus par le terminal, des requêtes formulées par un utilisateur dudit terminal en réponse à la reception d'un message d'invite, des informations transmises par le serveur, en réponse à une requête, est caractérisé en ce qu'il comprend en outre :
- des étapes pour identifier et stocker sélectivement des requêtes émises depuis le terminal,
- des étapes pour générer et visualiser dans une fenêtre de consultation, une liste des requêtes stockées sélectivement au cours de la session,
- des étapes, dites de dépliage, pour sélectionner à l'initiative de l'utilisateur une requête au sein de la liste de requêtes en vue de consulter les informations reçues en réponse à cette requête, chaque étape de dépliage étant suivie d'une étape pour lire et visualiser dans la fenêtre de consultation les informations stockées reçues en réponse à ladite requête, ces informations étant visualisées au sein de la liste de requêtes à la suite de ladite requête, et
- des étapes, dites de pliage, pour sélectionner à l'initiative de l'utilisateur une requête ayant fait l'objet d'une étape de dépliage antérieure, en vue de masquer dans la fenêtre de consultation la visualisation des informations correspondant à ladite requête sélectionnée.

Ainsi, avec le procédé selon l'invention, il devient possible, dans une même fenêtre de consultation, soit de visualiser une liste ou historique contenant uniquement les requêtes émises depuis le terminal, soit cette liste dans laquelle sont insérées des informations en réponse à une ou plusieurs requêtes. De cette façon, l'utilisateur du terminal dispose d'une possibilité de "pliage" de la mémoire de capture, la liste des requêtes rassemblant en quelque sorte les plis de cette mémoire. L'utilisateur peut à volonté en commander le dépliage pour consulter telle ou telle réponse à une requête. Ceci apporte une meilleure lisibilité du contenu des informations et messages capturés en cours de session. Les informations de réponse peuvent en outre être visualisées dans de nouvelles fenêtres ouvertes à dessein, par exemple par une commande de type FOCUS.

Il existe certes déjà des procédés de consultation de fichiers mettant en oeuvre des étapes d'ouverture et de fermeture équivalentes aux étapes de dépliage et de pliage mises en oeuvre dans le procédé selon l'invention. On peut effectivement citer les gestionnaires de fichiers dans des systèmes d'exploitation en mode fenêtre. Cependant, ces procédés de consultation s'appliquent à des fichiers ou documents déjà constitués et classés au sein d'une arborescence.

Le mérite de la présente invention réside ainsi dans le fait d'avoir combiné les fonctionnalités des modes actuels de gestion de fichier et les contraintes et caractéristiques spécifiques des échanges entre un serveur et un terminal, dans le but de procurer à l'utilisateur une consultation des réponses à une requête plus aisée qu'avec les procédés actuels.

Dans un premier mode d'exploitation du procédé selon l'invention, les étapes d'identification et de stockage sélectif des requêtes comprennent:
- des étapes pour détecter et analyser chaque message d'invite provenant du serveur, et
- des étapes pour stocker sélectivement les requêtes élaborées par l'utilisateur du terminal en réponse à chaque message d'invite détecté.

Ce premier mode correspond au cas où les messages d'invite émis par le serveur auquel le terminal est connecté sont reconnus par l'émulateur de ce terminal.

Dans le cas contraire, lorsque le terminal est connecté à un serveur inconnu ou lorsque les messages d'invite ne sont pas reconnus, le procédé de consultation selon l'invention fonctionne alors dans un second mode d'exploitation dans lequel les étapes d'identification et de stockage sélectif comprennent des étapes pour identifier localement chaque nouvelle requête entrée par l'utilisateur. Ce second mode d'exploitation correspond à l'émulation d'un terminal de base et permet à l'utilisateur d'envoyer une requête à tout moment.

Dans une version préférée du procédé de consultation selon l'invention, à chaque requête au sein de la liste de requête est associé un élément graphique, et chaque étape de pliage et de dépliage est activée en pointant, par des moyens de sélection au sein du terminal, l'élément graphique associé à la requête concernée.

Ceci offre à l'utilisateur un accès très facile au contenu des réponses, puisqu'il lui suffit en pratique de cliquer, à l'aide d'une souris ou de tout autre dispositif équivalent, sur un élément graphique associé à la requête choisie, par exemple, une barre, une case ou tout autre élément, pour obtenir les informations contenues dans la réponse à cette requête.

Suivant une disposition avantageuse du procédé selon l'invention, les étapes de pliage et de dépliage peuvent être exécutées en ligne au cours la session d'interrogation, la liste de requêtes étant en permanence actualisée. Ceci permet de combiner les avantages d'une interrogation en ligne en terme de consultation immédiate des réponses, et les possibilités d'organisation rationnelles des messages échangés entre le serveur et le terminal.

Par ailleurs, le procédé de consultation selon l'invention peut également inclure des étapes de pliage et de dépliage exécutées hors ligne sur les données capturées à l'issue d'une session d'interrogation.

Lorsqu'il s'agit d'une interrogation d'une base de données conduisant à l'émission par le serveur d'un en semble de réponses pour une même requête, le procédé selon l'invention comprend en outre, lors de la réception dudit ensemble de réponses, des étapes pour détecter, pour chaque réponse à ladite requête, des éléments d'identification, des étapes pour insérer dans la liste de requêtes à la suite de ladite requête les éléments d'identification ainsi détectés, des sous-étapes de dépliage pour sélectionner par son élément d'identification une réponse parmi l'ensemble de réponses à ladite requête en vue de consulter les informations contenues dans cette réponse, ces informations étant insérées dans la fenêtre de consultation à la suite de l'élément d'identification sélectionnée, et des sous-étapes de pliage pour sélectionner par son élément d'identification une réponse ayant préalablement fait l'objet d'une étape de dépliage, en vue de masquer dans la fenêtre de consultation la visualisation des informations correspondant à ladite réponse sélectionnée.

On peut également prévoir que la liste de requêtes visualisée dans la fenêtre de consultation comprenne en outre, pour tout ou partie des requêtes, des informations complémentaires relatives à l'exécution de cette requête. Ces informations complémentaires peuvent notamment inclure des informations relatives aux conditions de transmission des requêtes.

Le procédé de consultation selon l'invention peut être également appliqué à des interrogations lancées en mode différé. Ainsi, pour une session réalisée par exécution d'une suite de requêtes préalablement saisies et stockées hors ligne, cette suite de requêtes étant visualisée au sein de la liste de requêtes dans la fenêtre de consultation, le procédé selon l'invention comprend en outre, au cours du traitement en ligne de chaque requête par le serveur, une visualisation progressive des informations de réponse à ladite requête dans la fenêtre de consultation, au fur et à mesure de leur réception par le terminal.

Dans ce mode de réalisation du procédé de consultation selon l'invention, la fenêtre de consultation peut comprendre en outre au moins un élément graphique de disponibilité pour indiquer si une requête suivante peut être émise.

Suivant un autre aspect de l'invention tel que défini dans la revendication indépendante 10 il est proposé un terminal connecté via un réseau de communication à au moins un serveur gérant une base de données, mettant en oeuvre le procédé selon l'invention, ce terminal comprenant des moyens de contrôle et de traitement auxquels sont associés des moyens de communication avec le réseau, des moyens de stockage, des moyens de saisie, des moyens de sélection, des moyens de visualisation et des moyens d'interface graphique, caractérisé en ce que les moyens de contrôle et de traitement coopèrent avec les moyens de communication et les moyens d'interface graphique pour générer et visualiser dans une fenêtre de consultation une liste des requêtes émises depuis le terminal à destination du serveur, et en ce que les moyens de sélection coopèrent avec les moyens d'interface graphique, les moyens de stockage et les moyens de contrôle et de traitement pour sélectionner une requête au sein de la liste de requêtes et visualiser dans la fenêtre de consultation des informations reçues en réponse à ladite requête et préalablement capturées et stockées dans les moyens de stockage.

Dans une forme préférée de réalisation d'un terminal selon l'invention, les moyens d'interface graphique sont agencés pour associer à chaque requête au sein de la liste de requête un élément graphique, et les moyens de sélection coopèrent avec les moyens de contrôle et de traitement, les moyens de stockage et les moyens d'interface graphique pour sélectionner une requête par son élément graphique associé et pour visualiser les informations reçues en réponse à cette requête.

Pour la mise en oeuvre du procédé selon l'invention dans le cas d'un ensemble de réponses par requête, les moyens de contrôle et de traitement sont agencés pour détecter, pour chaque réponse à ladite requête, des éléments d'identification, et coopèrent avec les moyens d'interface graphique pour insérer dans la liste de requêtes à la suite de ladite requête les éléments d'identification détectés.

Pour faciliter la sélection d'une réponse parmi un ensemble de réponses, les moyens de sélection coopèrent avec les moyens de contrôle et de traitement, les moyens de stockage et les moyens d'interface graphique, pour sélectionner par son élément d'identification une réponse parmi l'ensemble de réponses à ladite requête en vue de consulter les informations contenues dans cette réponse, ces informations étant insérées dans la fenêtre de consultation à la suite de l'élément d'identification sélectionnée.

Par ailleurs, les moyens de sélection coopèrent avec les moyens de contrôle et de traitement, les moyens de stockage et les moyens d'interface graphique, pour sélectionner par son élément d'identification une réponse ayant préalablement fait l'objet d'une étape de dépliage, en vue de masquer dans la fenêtre de consultation la visualisation des informations correspondant à ladite réponse sélectionnée.

Le terminal selon l'invention peut être également prévu pour être utilisé en mode différé, les moyens de contrôle et de traitement, les moyens de communication et les moyens de stockage étant agencés pour permettre une transmission différée d'une suite de requêtes préalablement saisie et stockée hors ligne. Dans ce cas, les moyens d'interface graphique et les moyens de sélection sont agencés pour inhiber la sélection d'une requête par son élément graphique en vue de consulter les informations de réponse correspondantes, tant que les moyens de contrôle et de traitement n'ont pas détecté et traité une réception et un stockage de ces informations.

On peut également prévoir que les moyens de contrôle et de traitement et les moyens d'interface graphique coopèrent pour fournir dans la fenêtre de traitement un élément graphique indiquant si une requête suivante peut être émise.

D'autres particularités et avantages de l'invention apparaîtront encore dans la description ci-après. Aux dessins annexés donnés à titre d'exemples non limitatifs :
- la figure 1 est un synoptique illustrant les caractéristiques essentielles du procédé de consultation selon l'invention mis en oeuvre dans un terminal communiquant avec des serveurs via un réseau ;
- la figure 2A est un synoptique illustrant des étapes essentielles d'une session d'interrogation au cours de laquelle le procédé selon l'invention est mis en oeuvre ;
- la figure 2B représente un premier exemple d'une fenêtre de consultation visualisant une liste de requêtes, en référence au synoptique de la figure 2A;
- la figure 2C représente un nouvel état de la fenêtre de consultation représentée en figure 2B, lorsqu'une requête est sélectionnée pour dépliage;
- la figure 3A est un synoptique illustrant des étapes du procédé selon l'invention, exécutées lorsque les informations reçues en réponse à une requête comprennent plusieurs réponses ;
- la figure 3B représente un second exemple d'une fenêtre de consultation visualisant une liste de requêtes incluant des identifiants de réponse ;
- la figure 3C représente la fenêtre de consultation de la figure 3B, lorsqu'une réponse est sélectionnée pour dépliage ;
- la figure 4A est un synoptique illustrant des étapes du procédé selon l'invention, exécutées dans le cas d'un traitement en mode différé de la session ;
- la figure 4B représente un exemple d'un écran comprenant notamment une fenêtre de consultation et une fenêtre de traitement d'une requête en cours ; et
- la figure 4C représente la fenêtre de la figure 4B, lorsqu'une étape de dépliage a été autorisée et exécutée.

On va maintenant décrire une forme préférée de mise en oeuvre d'un procédé de consultation selon l'invention, en même temps qu'un terminal de consultation mettant en oeuvre ce procédé, en référence aux figures précitées.

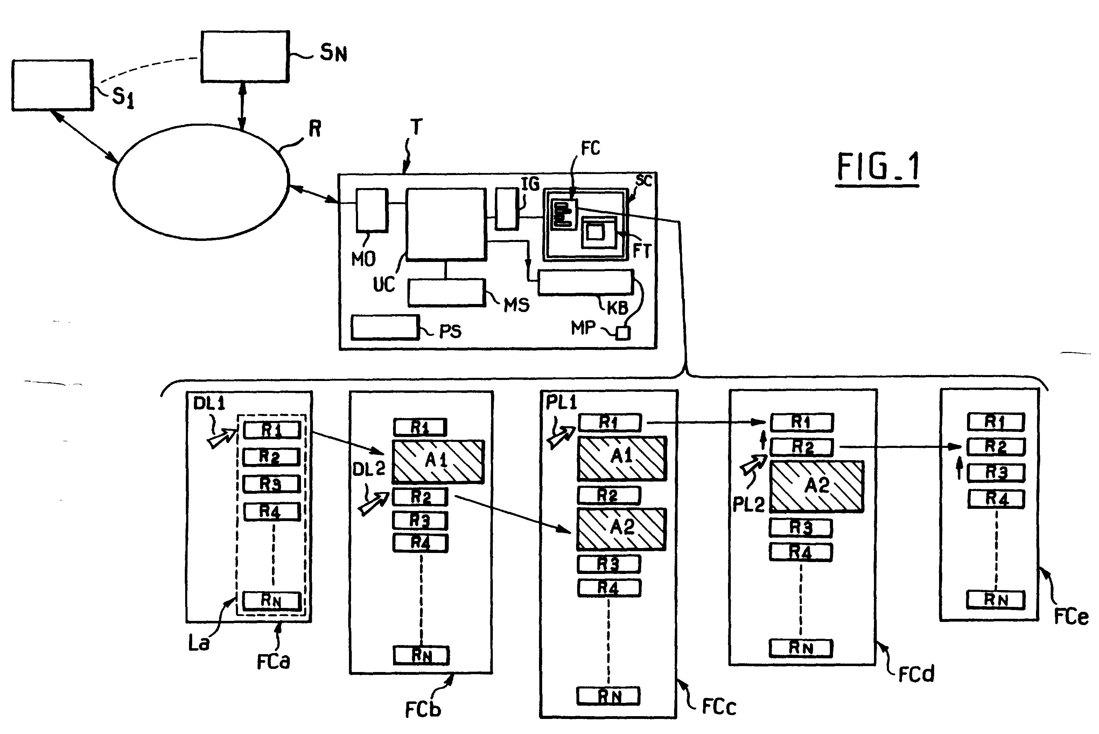

Le procédé de consultation selon l'invention est avantageusement mis en oeuvre dans un terminal T de consultation connecté via un réseau de communication R à des serveurs S1,..,SN, en référence à la figure 1. Ce terminal comprend usuellement une unité de modulation/démodulation MO, une unité centrale UC, une unité d'interface graphique IG, un écran SC, un clavier KB, une unité d'alimentation électrique PS, un dispositif de pointage MP tel qu'une souris, et des moyens de stockage MS. Ces moyens de stockage comprennent généralement une ou plusieurs unités de stockage non volatiles, notamment pour stocker un système d'exploitation, un programme d'émulation du terminal et des logiciels utilitaires, et des unités de stockage volatiles.

Le procédé de consultation selon l'invention met en oeuvre un interface graphique en mode fenêtre. Ainsi, l'écran Sc du terminal T peut inclure des fenêtres de consultation FC et des fenêtres de traitement FT.

Lorsqu'un utilisateur du terminal souhaite interroger une base de données gérée par un serveur, il entreprend une opération de connexion à ce serveur au cours de laquelle il fournit un identifiant et un mot de passe. Lorsque la connexion entre le terminal et le serveur est établie, l'utilisateur est invité à formuler une première requête, par un message d'invite ou "prompt" émis par le serveur. Cette première requête, entrée au moyen du clavier KB et terminée par une action sur la touche "entrée, apparaît dans la fenêtre de consultation FC. Après transmission de cette requête au serveur, celui-ci la traite et émet une réponse à destination du terminal T. Au fur et à mesure que les caractères constituant cette réponse sont reçus, ils sont visualisés dans la fenêtre de consultation si ce sont des caractères pertinents, tels que des caractères de documents ou d'informations de recherche. Ainsi, la réponse associée à une requête est disponible dès réception des premiers caractères.

Ces opérations requête/réponse sont renouvelées autant de fois que l'utilisateur l'estime nécessaire. A l'issue d'une consultation, que le terminal soit encore connecté (en ligne) ou déconnecté du réseau (hors ligne), l'utilisateur peut disposer, dans la fenêtre de consultation FCa, soit de la liste La des requêtes R1-R4, RN que celui-ci a émis au cours de la session (mode replié), soit de l'ensemble des requêtes et réponses visualisées au cours de la session (mode déplié), soit d'une combinaison de requêtes/réponses visualisées et de requêtes seules (mode partiellement déplié). Dans le mode replié, la liste obtenue est particulièrement claire puisque débarrassée des messages d'invite et des résultats bruts. l'utilisateur peut alors sélectionner une requête, par exemple la première requête R1, en pointant celle-ci avec les moyens de pointage. Le procédé entreprend alors une étape dite de dépliage DL1 à l'issue de laquelle apparaissent les informations A1 de réponse à cette requête. La fenêtre de consultation présente alors un nouveau contenu FCb dans lequel la réponse A1 est insérée à la suite de la requête correspondante. Cette réponse peut ensuite être traitée comme tout autre document. Si l'utilisateur réitère l'opération de dépliage en souhaitant consulter le résultat de la requête R2 (étape DL2), on obtient dans la fenêtre de consultation FCc la réponse A2 à cette requête. L'utilisateur peut également commander le "repliage" des données contenues dans la fenêtre de consultation en sélectionnant une requête actuellement "dépliée", par exemple la requête R1. L'étape de pliage PL1 conduit à la disparition de la réponse A1 dans la fenêtre de consultation FCd. Si l'opération est réitérée par une commande de pliage PL2, on retrouve dans la fenêtre de consultation FCe la forme initiale de la liste de requêtes.

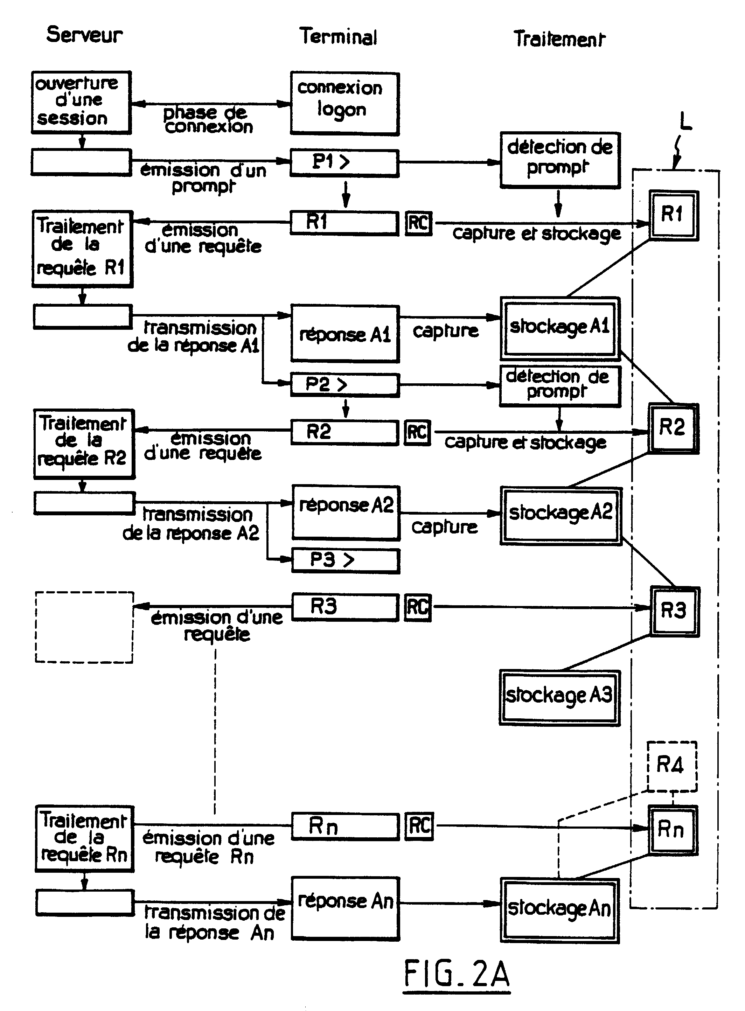

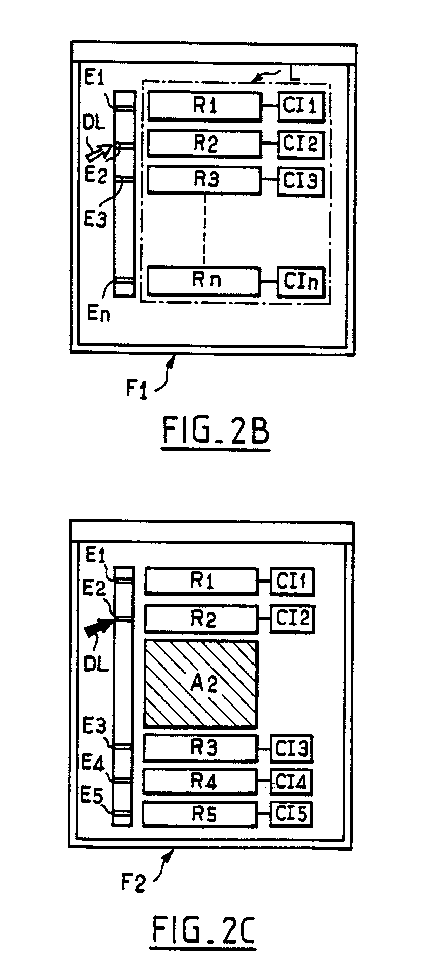

On va maintenant décrire -plus en détail les transactions entre le serveur et le terminal dans la cadre du procédé selon l'invention, ainsi que les étapes de traitement et de visualisation, en référence aux figures 2A, 2B et 2C.

Après la phase de connexion et l'ouverture d'une session, le serveur émet un message d'invite P1 (prompt). L'utilisateur émet alors une requête R1 qui est traitée par le serveur. Celui-ci transmet alors une réponse A1 qui est capturée et stockée dans les moyens de stockage du terminal. La transmission de la réponse A1 est immédiatement suivie d'un nouveau message d'invite P2. Ces opérations sont réitérées jusqu'à obtenir un ensemble de requêtes R1-R4, Rn auxquelles sont associées des réponses A1-A3, An. Le procédé de consultation fournit à l'utilisateur dans une fenêtre de consultation F1 la liste L de ces requêtes. A chaque requête R1-R3, Rn est associé un élément graphique E1-E3, En, par exemple une barre, une case ou tout autre signe ou symbole, et éventuellement une information complémentaire CI1-CI3, CIn relative par exemple à la nature des réponses ou aux conditions de communication. Lorsque l'utilisateur pointe (DL) l'élément graphique E2 associé à une requête R2, apparaît alors dans la fenêtre de consultation F2 la réponse A2 à cette requête.

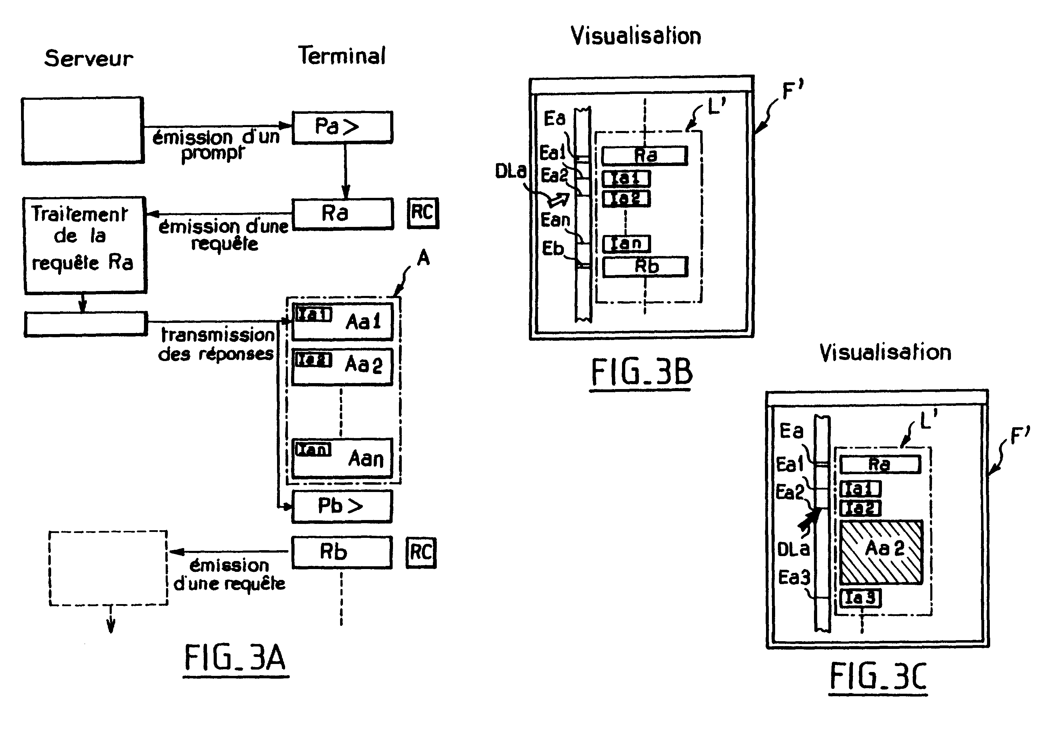

Lors de la consultation d'une base de données pouvant délivrer plusieurs réponses à une même requête, par exemple une base de brevets, le procédé de consultation selon l'invention procure à l'utilisateur la possibilité de repérer aisément une réponse parmi un ensemble de réponses. Ainsi, en référence à la figure 3A, lorsqu'un serveur transmet en réponse à une requête Ra émise à la suite d'un message d'invite Pa un ensemble A constitué de plusieurs réponses Aa1, Aa2,.., Aan, le procédé selon l'invention peut être configuré pour traiter ces différentes réponses, en détectant par exemple des identifiants Ia1, Ia2,.., Ian en début de chaque réponse. L'utilisateur alors dans une fenêtre de consultation F' d'une liste L' contenant non seulement les requêtes Ra, Rb émises au cours de la session, mais également les intitulés ou identifiants ( par exemple, 1/5, 2/5, 3/5, 4/5, 5/5) des réponses multiples à plusieurs requêtes, en référence à la figure 3B. L'utilisateur peut alors à loisir consulter les différentes réponses en pointant et sélectionnant (étape DLa), par exemple par son élément graphique associé Ea2, l'identifiant de réponse souhaité Ia2, en vue de consulter le contenu Aa2 de la réponse.), en référence à la figure 3C.

Il faut noter que la subdivision d'une réponse à une requête en un ensemble de réponses qui peuvent être traitées et visualisées individuellement peut être appliquée à plusieurs niveaux, jusqu'à l'obtention et le traitement de documents élémentaires.

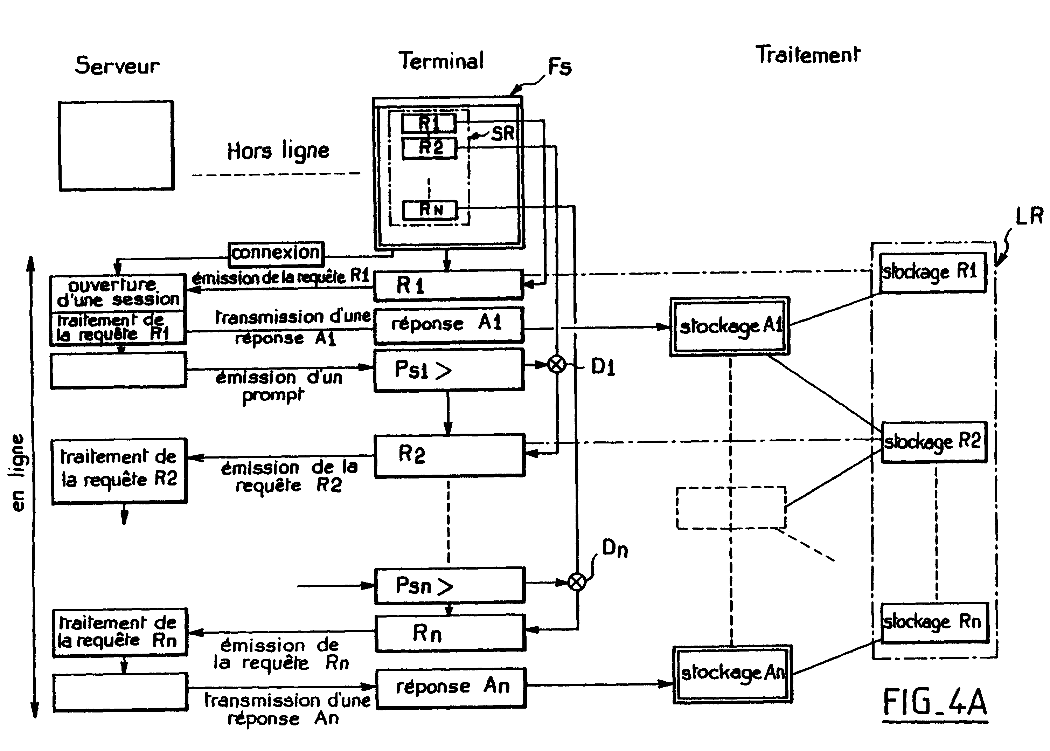

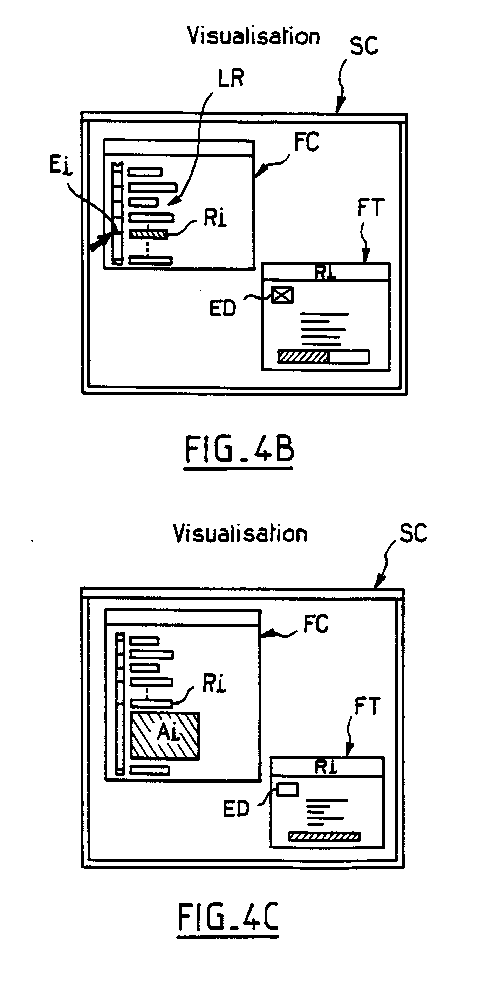

Le procédé de consultation selon l'invention peut également être mis en oeuvre dans un mode différé d'exécution des requêtes. Dans un tel mode, illustré par les figures 4A à 4C, des requêtes R1, R2, RN sont saisies et stockées préalablement à toute connexion. Elles apparaissent par exemple dans une fenêtre Fs et constitue une liste de requêtes (mode Script) . L'utilisateur commande alors une connexion du terminal avec un serveur. Lorsque la session est ouverte, et après réception d'un message d'invite (prompt), la première requête R1 de la liste est émise, puis traitée par le serveur qui en retour transmet une réponse A1 qui est normalement visualisée, capturée et stockée. Un nouveau message d'invite Ps1 est reçu par le terminal en provenance du serveur. Ce message d'invite est détecté (D1) par le procédé qui entreprend alors l'émission de la requête suivante R2. Ce processus est renouvelé jusqu'à ce que la liste initiale de requêtes soit épuisée: ainsi lors de la réception du message d'invite Psn, la détection (Dn) de ce message conduit à l'émission de la dernière requête Rn suivie d'une réponse An. Le traitement des différentes transactions entre le serveur et le terminal est matérialisé par la visualisation (voir figure 4B) sur l'écran SC du terminal T d'une fenêtre de consultation contenant la liste LR des requêtes préalablement saisies auxquelles des éléments graphiques de sélection sont associés, et d'une fenêtre de traitement FT illustrant l'état du traitement de la requête en cours Ri. Cette fenêtre de traitement FT contient de préférence un indicateur graphique de disponibilité ED indiquant si une requête suivante peut être émise. Au cours du traitement en ligne de chaque requête Ri par le serveur, l'utilisateur dispose d'une visualisation progressive des informations Ai de réponse à ladite requête Ri dans la fenêtre de consultation Fs, au fur et à mesure de la réception par le terminal T des caractères constituant ces informations. Lorsque la transmission de la réponse Ai à la requête Ri est terminée, l'indicateur ED change d'état (voir figure 4C).

Le procédé de consultation peut être, à titre d'exemple non limitatif, matérialisé par un code résident dans les moyens de stockage permanent du terminal, écrit dans un langage orienté objet, par exemple le langage C++, et associé à un logiciel interface graphique du marché, tel que Windows commercialisé par Microsoft, ou X-Window pour les systèmes Unix. Par ailleurs, le procédé de consultation peut avantageusement faire appel à une librairie de communication qui va notamment assurer la configuration du modem et en décharger ainsi l'utilisateur du terminal.

Il faut noter que le procédé de consultation selon l'invention peut être avantageusement combiné avec les fonctionnalités classiques d'un système d'exploitation en mode fenêtre. Ainsi, une commande de type FOCUS peut permettre de visualiser dans une fenêtre spécifique une réponse à une requête particulière sélectionnée dans la liste de requêtes.

Bien sur, l'invention n'est pas limitée aux exemples qui viennent d'être décrits et de nombreux aménagements peuvent être apportés à ces exemples sans sortir du cadre de l'invention. Ainsi, le procédé selon l'invention peut être mis en oeuvre quel que soit le type de serveur ou de terminal, pourvu que ce terminal soit au moins pourvu de moyens de contrôle et de traitement et de moyens de stockage. Par ailleurs, on peut adopter une grande variété de présentations des fenêtres de consultation et de traitement. De même, les éléments graphiques permettant la sélection des requêtes peuvent être quelconques, par exemple des formes géométriques simples ou complexes, des symboles ou caractères. Les identifiants de réponse, dans le cas de réponses multiples pour une même requête, peuvent par exemple être des nombres, des symboles alphanumériques. Il faut par ailleurs noter que le procédé de consultation selon l'invention n'est pas lié à un type particulier de serveur ou à un mode particulier de communication, mais a vocation à être mis en oeuvre sur une station ou plate-forme multi-serveur.

## Revendications

1. Procédé pour consulter des informations reçues d'au moins un serveur (S1, SN), en réponse à des requêtes transmises à ce serveur (S1, SN) depuis un terminal (T), comprenant, au cours de chaque session de communication,
- une étape pour capturer et stocker cumulativement des échanges d'information entre le serveur (S1, SN) et le terminal (T), ces échanges d'information comprenant des messages d'invite (P1-P3; Pa, Pb; Ps1, Psn) émis par le serveur (S1, SN) et reçus par le terminal (T), des requêtes (R1-R4, RN, Rn, Ra, Rb), formulées par un utilisateur dudit terminal (T) en réponse à la réception d'un message d'invite (P1-P3; Pa, Pb; Ps1, Psn), des informations (A1-A3, An, Aa1, Aa2, Aan) transmises par le serveur (S1, SN), en réponse à une requête:
- des étapes pour identifier et stocker sélectivement des requêtes (R1-R4, RN, Rn, Ra, Rb) émises depuis le terminal (T),
- des étapes pour générer et visualiser dans une fenêtre de consultation (FC, FCa, FCb, FCc, FCd, FCe, F1, F2, FC, FC') une liste des requêtes stockées sélectivement au cours de la session, caractérisé en ce qu'il comprend en outre:
- des étapes (DL1, DL2), dites de dépliage, pour sélectionner à l'initiative de l'utilisateur une requête (R1, R2) au sein de la liste de requêtes en vue de consulter les informations reçues en réponse à cette requête, chaque étape de dépliage étant suivie d'une étape pour visualiser dans la fenêtre de consultation (FCb) au sein de la liste de requêtes à la suite de ladite requête (R1) les informations stockées (A1) reçues en réponse à ladite requête (R1), et
- des étapes (PL1, PL2), dites de pliage, pour sélectionner à l'initiative de l'utilisateur une requête ayant fait l'objet d'une étape de dépliage (DL1, DL2) antérieure, en vue de supprimer dans la fenêtre de consultation (FCd, FCe) la visualisation des informations (A1, A2) correspondant à ladite requête sélectionnée (R1, R2),
et en ce que les étapes d'identification et de stockage sélectif comprennent:
- des étapes pour détecter et analyser chaque message d'invite (P1-P3; Pa, Pb; Ps1, Psn) provenant du serveur (S1, SN), et
- des étapes pour stocker sélectivement les requêtes (R1-R4, RN, Rn, Ra, Rb) élaborées par l'utilisateur du terminal (T) en réponse à chaque message d'invite détecté (P1-P3; Pa, Pb; Ps1, Psn).

2. Procédé selon la revendication 1, caractérisé en ce que les étapes d'identification et de stockage sélectif comprennent des étapes pour identifier localement chaque nouvelle requête entrée par l'utilisateur.

3. Procédé selon l'une des revendications précédentes, caractérisé en ce qu'à chaque requête (R1-R3, Rn) au sein de la liste de requête (L) est associé un élément graphique (E1-E3, En), et en ce que chaque étape de pliage et de dépliage est activée en pointant, par des moyens de sélection (M) au sein du terminal (T), l'élément graphique associé à la requête concernée.

4. Procédé selon l'une des revendications précédentes, caractérisé en ce que les étapes de pliage et de dépliage peuvent être exécutées en ligne au cours la session d'interrogation, la liste de requêtes étant en permanence actualisée.

5. Procédé selon l'une des revendications précédentes, caractérisé en ce que les étapes de pliage et de dépliage peuvent être exécutées hors ligne après une session d'interrogation.

6. Procédé selon l'une des revendications précédentes, mis en oeuvre dans une session d'interrogation dans laquelle des informations (A) reçues du serveur (S1, SN) en réponse à une requête (Ra) sont organisées en un ensemble de réponses (Aa1, Aa2, Aan), caractérisé en ce qu'il comprend en outre, lors de la réception dudit ensemble de réponses (Aa1, Aa2, Aan), des étapes pour détecter, pour chaque réponse à ladite requête, des éléments d'identification (Ia1, Ia2, Ian), des étapes pour insérer dans la liste de requêtes (L') à la suite de ladite requête (Ra) les éléments d'identification ainsi détectés (Ia1, Ia2, Ian), et en ce qu'il comprend en outre des sous-étapes de dépliage (DLa) pour sélectionner par son élément d'identification (Ia2) une réponse (Aa2) parmi l'ensemble de réponses à ladite requête (Ra) en vue de consulter les informations contenues dans cette réponse (Aa2), ces informations étant insérées dans la fenêtre de consultation (F'a) à la suite de l'élément d'identification sélectionné (Ia2), et des sous-étapes de pliage pour sélectionner par son élément d'identification (Ia2) une réponse ayant préalablement fait l'objet d'une étape de dépliage (DLa), en vue de supprimer dans la fenêtre de consultation (F'a) la visualisation des informations correspondant à ladite réponse sélectionnée.

7. Procédé selon l'une des revendications précédentes, caractérisé en ce que la liste de requêtes (L) visualisée dans la fenêtre de consultation (F1) comprend en outre, pour au moins l'une de ces requêtes (R1-R3, Rn), des informations complémentaires (CI1-CI3, CIn) relatives à l'exécution de cette requête.

8. Procédé selon l'une des revendications précédentes, appliqué à une session réalisée par exécution d'une suite (SR) de requêtes (R1, R2, RN) préalablement saisies et stockées hors ligne, cette suite (SR) de requêtes (R1, R2, RN) étant visualisée dans la fenêtre de consultation (Fs), caractérisé en ce qu'il comprend en outre, au cours du traitement en ligne de chaque requête (Ri) par le serveur, une visualisation progressive des informations (Ai) de réponse à ladite requête (Ri) dans la fenêtre de consultation (Fs), au fur et à mesure de leur réception par le terminal (T).

9. Procédé selon la revendication 8, comprenant en outre des étapes pour associer à chaque requête en cours de traitement (Ri) une fenêtre de traitement (Fti) contenant des informations relatives au traitement en coures, caractérisé en ce que la fenêtre de traitement (Fti) contient en outre au moins un élément graphique de disponibilité (ED) indiquant si une requête suivant peut être émise.

10. Terminal (T) connecté via un réseau de communication (K) à au moins un serveur (S1, SN), mettant en oeuvre le procédé selon l'une quelconque des revendications précédentes, ce terminal (T) comprenant:
- des moyens pour capturer et stocker cumulativement des échanges d'information entre le serveur (S1, SN) et le terminal (T), ces échanges d'information comprenant des messages d'invite (P1-P3; Pa, Pb; Ps1, Psn) émis par le serveur (S1, SN) et reçus par le terminal (T), des requêtes (R1-R4, RN, Rn, Ra, Rb), formulées par un utilisateur dudit terminal (T) en réponse à la réception d'un message d'invite (P1-P3; Pa, Pb; Ps1, Psn), des informations (A1-A3, An, Aa1, Aa2, Aan) transmises par le serveur (S1, SN), en réponse à une requête:
- des moyens pour identifier et stocker sélectivement des requêtes (R1-R4, RN, Rn, Ra, Rb) émises depuis le terminal (T),
- des moyens pour générer et visualiser dans une fenêtre de consultation (FC, FCa, FCb, FCc, FCd, Fce, F1, F2, FC, FC') une liste de requête stockées sélectivement au cours de la session, caractérisé en ce qu'il comprend en outre:
- des moyens dits de dépliage, pour sélectionner à l'initiative de l'utilisateur une requête (R1, R2) au sein de la liste de requêtes en vue de consulter les information reçues en réponse à cette requête, coopérant avec des moyens pour visualiser dans la fenêtre de consultation (FCb) au sein de la liste de requête à la suite de ladite requête (R1) les informations stockées (A1) reçues en réponse à ladite requête (R1), et
- des moyens dits de pliage, pour sélectionner à l'initiative de l'utilisateur une requête sélectionnée par les moyens de dépliage, en vue de supprimer dans la fenêtre de consultation (FCd, Fce) la visualisation des informations (A1, A2) correspondant à ladite requête sélectionnée (R1, R2),
et en ce que les moyens d'identification et de stockage sélectif comprennent:
- des moyens pour détecter et analyser chaque message d'invite (P1-P3; Pa, Pb; Ps1, Psn) provenant du serveur (S1, SN), et
- des moyens pour stocker sélectivement les requêtes (R1-R4, RN, Rn, Ra, Rb) élaborées par l'utilisateur du terminal (T) en réponse à chaque message d'invite détecté (P1-P3; Pa, Pb; Ps1, Psn).

11. Terminal (T) selon la revendication 10, caractérisé en ce que les moyens de contrôle et de traitement (US) et les moyens d'interface graphique (IG) coopèrent pour associer à chaque requête (R1-R3, Rn) au sein de la liste de requêtes (L) un élément graphique (E1-E3, En), et en ce que les moyens de sélection (MP) coopèrent avec les moyens de contrôle et de traitement (UC) , les moyens de stockage (MS) et les moyens d'interface graphique (IG) pour sélectionner une requête (R2) par son élément graphique associé (E2) et pour visualiser les informations (A2) reçues en réponse à cette requête (R2).

12. Terminal (T) selon l'une des revendications 10 ou 11, mis en oeuvre dans une session d'interrogation dans laquelle des informations (A) reçues du serveur en réponse à une requête (Ra) comprennent un ensemble de réponses (Aa1, Aa2, Aan), caractérisé en ce que les moyens de contrôle et de traitement (UC) sont agencés pour détecter, pour chaque réponse (Aa1, Aa2, Aan) à ladite requête (Ra), des éléments d'identification (Ia1, Ia2, Ian), et coopèrent avec les moyens d'interface graphique (IG) pour insérer dans la liste de requêtes (L') à la suite de ladite requête (Ra) les éléments d'identification détectés (Ia1, Ia2, Ian).

13. Terminal (T) selon la revendication 12, caractérisé en ce que les moyens de sélection (MP) coopèrent avec les moyens de contrôle et de traitement (UC) , les moyens de stockage (MS) et les moyens d'interface graphique (IG), pour sélectionner par son élément d'identification (Ia2) une réponse (Aa2) parmi l'ensemble (A) de réponses (Aa1, Aa2, Aan) à ladite requête (Ra) en vue de consulter les informations contenues dans cette réponse, ces informations étant insérées dans la fenêtre de consultation (F') à la suite de l'élément d'identification sélectionné (Ia2).

14. Terminal (T) selon la revendication 13, caractérisé en ce que les moyens de sélection (MP) coopèrent avec les moyens de contrôle et de traitement (UC), les moyens de stockage (MS) et les moyens d'interface graphique (IG), pour sélectionner par son élément d'identification (Ia2) une réponse (Aa2) ayant préalablement fait l'objet d'une étape de dépliage (DLa), en vue de supprimer dans la fenêtre de consultation (F') la visualisation des informations correspondant à ladite réponse sélectionnée (Aa2).

15. Terminal (T) selon la revendication 14, les moyens de contrôle et de traitement (UC), les moyens de communication (MO) et les moyens de stockage (MS) étant agencés pour permettre une transmission différée d'une suite (SR) de requêtes (R1, R2, RN) préalablement saisies et stockées hors ligne, caractérisé en ce que les moyens d'interface graphique (IG), les moyens de communication (MO) et les moyens de contrôle et de traitement coopèrent pour fournir, au cours du traitement en ligne de chaque requête (Ri) par le serveur, une visualisation progressive des informations (Ai) de réponse à ladite requête (Ri) dans la fenêtre de consultation (Fs), au fur et à mesure de leur réception par le terminal (T).

16. Terminal (T) selon la revendication 15, les moyens d'interface graphique (IG) coopérant avec mes moyens de contrôle et de traitement (UC) pour fournir une fenêtre de traitement (FTi) contenant des informations relatives au traitement d'une requête en cours (Ri), caractérisé en ce que les moyens de contrôle et de traitement (UC) et les moyens d'interface graphique (IG) coopèrent pour fournir dans cette fenêtre de traitement (FTi) un élément graphique de disponibilité (ED) indiquant si une requête suivante peut être émise.

## Claims

1. Process for consulting information received from at least one server (S1, SN), in response to requests transmitted to the server (S1, SN) from a terminal (T), including, during each communication session,
- a stage when information exchanges between the server (S1, SN) and the terminal (T) are captured and stored cumulatively, these information exchanges including prompt messages (P1-P3; Pa, Pb; Ps1, Psn) emitted by the server (S1, SN) and received by the terminal (T), requests (R1-R4, RN, Rn, Ra, Rb), formulated by a user of said terminal (T) in response to the receipt of a prompt message (P1-P3; Pa, Pb; Ps1, Psn), information (A1-A3, An, Aa1, Aa2, Aan) transmitted by the server (S1, SN), in response to a request:
- stages for identifying and selectively storing requests (R1-R4, RN, Rn, Ra, Rb) issued from the terminal (T),
- stages for generating and displaying in a consultation window (FC, FCa, FCb, FCc, FCd, FCe, F1, F2, FC, FC') a list of requests selectively stored during the session, characterised in that it also includes:
- stages (DL1, DL2), called unfolding stages, for selection by the user of a request (R1, R2) from the list of requests with a view to consulting information received in response to this request, each unfolding stage being followed by a stage for displaying in the consultation window (FCb) the stored information (A1) received in response to the said request (R1), such information being displayed within the list of requests following the said request (R1), and
- stages (PL1, PL2), called folding stages, for selection by the user of a request which has been subject to a prior unfolding stage (DL1, DL2), with a view to masking the display in the consultation window (FCd, FCe) of the information (A1, A2) corresponding to the said selected request (R1, R2),
and in that the identification and selective storage stages comprise:
- stages for detecting and analysing each prompt message (P1-P3; Pa, Pb; Ps1, Psn) originating from the server (S1, SN), and
- stages for selectively storing requests (R1-R4, RN, Rn, Ra, Rb) defined by the terminal (T) user in response to each prompt message (P1-P3; Pa, Pb; Ps1, Psn) detected.

2. Process according to claim 1, characterised in that the identification and selective storage stages include stages for locally identifying each new request entered by the user.

3. Process according to one of the previous claims, characterised in that a graphical element (E1-E3, En) is associated with each request (R1-R3, Rn) in the list of requests (L), and in that each folding and unfolding stage is activated by pointing to the graphical element associated with the request in question, using the selection means (M) within the terminal (T).

4. Process according to one of the previous claims, characterised in that the folding and unfolding stages can be executed online during the interrogation session, as the list of requests is permanently updated.

5. Process according to one of the previous claims, characterised in that the folding and unfolding stages can be executed offline following an interrogation session.

6. Process according to one of the previous claims, implemented in an interrogation session in which the information (A) received from the server (S1, SN) in response to a request (Ra) is organised into a set of responses (Aa1, Aa2, Aan), characterised in that it also comprises, on receipt of the said set of responses (Aa1, Aa2, Aan), stages for detecting identification elements (Ia1, Ia2, Ian) for each response to the said request, stages for inserting the identification elements (Ia1, Ia2, Ian) thus identified into the list of requests (L') following the said request (Ra), and in that it also comprises unfolding sub-stages (DLa) for selecting by its identification element (Ia2) a response (Aa2) from the set of responses to the said request (Ra) with a view to consulting the information contained in that response (Aa2), this information being inserted into the consultation window (F'a) following the selected identification element (Ia2), and folding sub-stages for selecting by its identification element (Ia2) a response which has previously been subjected to an unfolding stage (DLa), with a view to masking in the consultation window (F'a) the display of the information corresponding to the said selected response.

7. Process according to one of the previous claims, characterised in that the list of requests (L) displayed in the consultation window (F1) also includes, for at least one of these requests (R1-R3, Rn), additional information (CI1-CI3, CIn) relating to the execution of this request.

8. Process according to one of the previous claims, applied to a session carried out by executing a series (SR) of requests (R1, R2, RN) previously entered and stored offline, this series (SR) of requests (R1, R2, RN) being displayed within the consultation window (Fs), characterised in that it also comprises, during the online processing of each request (Ri) by the server, a progressive display of information (Ai) issued in response to the said request (Ri) in the consultation window (Fs), as they are received by the terminal (T).

9. Process according to claim 8, also comprising stages for associating with each request currently being processed (Ri) a processing window (FTi) containing information relating to the current processing, characterised in that the processing window (FTi) also contains at least one availability graphical element (ED) indicating whether a following request can be issued.

10. Terminal (T) connected via a communications network (R) to at least one server (S1, SN), implementing the process according to one of the previous claims, this terminal (T) including:
- means for capturing and cumulatively storing information exchanges between the server (S1, SN) and the terminal (T), said information exchanges comprising prompt messages (P1-P3; Pa, Pb; Ps1 Psn) emitted by the server (S1, SN) and received by the terminal (T), requests (R1-R4, RN, Rn, Ra, Rb), formulated by a user of said terminal (T) in response to the reception of a prompt message (P1-P3; Pa, Pb; Ps1, Psn), information (A1-A3, An, Aa1, Aa2, Aan) transmitted by the server (S1, SN), in response to a request,
- means for identifying and selectively storing requests (R1-R4, RN, Rn, Ra, Rb) emitted from the terminal (T),
- means for generating and displaying in a consultation window (FC, FCa, FCb, FCc, FCd, FCe, F1, F2, FC, FC') a list of requests selectively stored during the session,
characterised in that it further includes:
- means called unfolding means, for selecting by the user a request (R1, R2) within the list of requests with a view to consulting information received in response to this request, co-operating with means for displaying in the consultation window (FCb) within the list of requests following said request (R1) stored information (A1) received in response to said request (R1),
and
- means called folding means, for selecting by the user a request selected by the unfolding means, with a view to masking in the consultation window (FCd, FCe) the displaying of information (A1, A2) corresponding to said selected request (R1, R2),
and in that the identification and selective storage means comprise:
- means for detecting and analysing each prompt message (P1-P3; Pa, Pb; Ps1, Psn) originating from the server (S1, SN), and
- means for selectively storing the requests (R1-R4, RN, Rn, Ra, Rb) elaborated by the user of the terminal (T) in response to each prompt message detected (P1-P3; Pa, Pb; Ps1, Psn).

11. Terminal (T) according to claim 10, characterised in that the control and processing means (UC) and the graphical interface means (IG) cooperate in order to associate a graphical element (E1-E3, En) with each request (R1-R3, Rn) in the list of requests (L), and in that the selection means (MP) cooperate with the control and processing means (UC), the storage means (MS) and the graphical interface means (IG) to select a request (R2) by its associated graphical element (E2) and to display the information (A2) received in response to this request.

12. Terminal (T) according to one of claims 10 or 11, implemented in an interrogation session in which the information (A) received from the server in response to a request (Ra) include a set of responses (Aa1, Aa2, Aan), characterised in that the control and processing means (UC) are designed to detect identification elements (Ia1, Ia2, Ian) for each response (Aa1, Aa2, Aan) to the said request (Ra), and cooperate with the graphical interface means (IG) to insert the detected identification elements (Ia1, Ia2, Ian) in the list of requests (L') following the said request (Ra).

13. Terminal (T) according to claim 12, characterised in that the selection means (MP) cooperate with the control and processing means (UC), the storage means (MS) and the graphical interface means (IG) in order to select by its identification element (Ia2) a response (Aa2) from the set (A) of responses (Aa1, Aa2, Aan) to the said request (Ra) with a view to consulting the information contained in that response, this information being inserted in the consultation window (F') following the selected identification element (Ia2).

14. Terminal (T) according to claim 13, characterised in that the selection means (MP) cooperate with the control and processing means (UC), the storage means (MS) and the graphical interface means (IG) in order to select by its identification element (Ia2) a response (Aa2) which has previously been subjected to an unfolding stage (DLa), with a view to masking in the consultation window (F') the display of the information corresponding to the said selected response (Aa2).

15. Terminal (T) according to claim 14, the control and processing means (UC), the communication means (MO) and the storage means (MS) being designed to allow deferred transmission of a series (SR) of requests (R1, R2, RN) previously input and stored offline, characterised in that the graphical interface means (IG), the communication means (MO) and the control and processing means cooperate in order to provide, in the course of the online processing of each request (Ri) by the server, a progressive display of the information (Ai) in response to said request (Ri) in the consultation window (Fs), as they are received by the terminal (T).

16. Terminal (T) according to claim 15, the graphical interface means (IG) cooperating with the control and processing means (UC) to supply a processing window (FTi) containing information relating to the processing of a current request (Ri), characterised in that the control and processing means (UC) and the graphical interface means (IG) cooperate to provide in this processing window (FTi) an availability graphical element (ED) indicating whether a following request can be issued.

## Patentansprüche

1. Verfahren zum Konsultieren der Informationen, die von mindestens einem Server (S1, SN) als Antwort auf an diesen Server (S1, SN) von einem Terminal (T) übertragenen Anfragen erhalten wurden, während jeder Kommunikationsperiode bestehend aus:
- einer Etappe zum Erfassen und kumulativen Speichern des Informationsaustausches zwischen dem Server (S1, SN) und dem Terminal (T), wobei dieser Informationsaustausch von dem Server (S1, SN) entsandte und von dem Terminal (T) empfangene Aufforderungsmeldungen (P1-P3; Pa, Pb; Ps1, Psn), von einem Benutzer dieses Terminals (T) formulierte Anfragen (R1-R4, RN, Rn, Ra, Rb) als Antwort auf den Erhalt einer Aufforderungsmeldung (P1-P3; Pa, Pb; Ps1, Psn), von dem Server (S1, SN) übertragene Informationen (A1-A3, An, Aa1, Aa2, Aan) als : Antwort auf eine Anfrage umfaßt:
- Etappen zur Identifizierung und selektiven Speicherung der von dem Terminal (T) entsandten Anfragen (R1-R4, RN, Rn, Ra, Rb),
- Etappen zur Erstellung und Anzeige in einem Konsultationsfenster (FC, FCa, FCb, FCc, FCd, FCe, F1, F2, FC, FC') einer Liste von Anfragen, die selektiv während der Periode gespeichert wurden, dadurch gekennzeichnet, daß es ferner umfaßt:
- sogenannte Aufklappetappen (DL1, DL2), um auf Initiative des Benutzers eine Anfrage (R1, R2) in der Anfragenliste auszuwählen, um die als Antwort auf diese Anfrage erhaltenen Informationen zu konsultieren, wobei auf jede Aufklappetappe eine Etappe zum Anzeigen der gespeicherten Informationen (A1) in dem Konsultationsfenster (FCb) folgt, welche als Antwort (A1) auf die Anfrage (R1) erhalten wurden, wobei diese Informationen in der Anfragenliste im Anschluß an diese Anfrage (R1) angezeigt werden, und
- sogenannte Zuklappetappen (PL1, PL2), um auf Initiative des Benutzers eine Anfrage auszuwählen, die Gegenstand einer vorhergehenden Aufklappetappe (DL1, DL2) war, um in dem Konsultationsfenster (FCd, FCe) die Anzeige der Informationen (A1, A2), die der ausgewählten Anfrage (R1, R2) entsprechen, abzudecken,
und daß die Etappen der Identifizierung und der selektiven Speicherung umfassen:
- Etappen zur Erfassung und Analyse jeder Aufforderungsmeldung (P1-P3; Pa, Pb; Ps1, Psn), die von einem Server (S1, SN) kommt, und
- Etappen zur selektiven Speicherung der von dem Benutzer des Terminals (T) ausgearbeiteten Anfragen (R1-R4, RN, Rn, Ra, Rb) als Antwort auf jede erfaßte Aufforderungsmeldung (P1-P3; Pa, Pb; Ps1, Psn).

2. Verfahren nach Anspruch 1, dadurch gekennzeichnet, daß die Etappen der Identifizierung und der selektiven Speicherung Etappen zur lokalen Identifizierung jeder neuen, von dem Benutzer eingegebenen Anfrage umfassen.

3. Verfahren nach einem der vorhergehenden Ansprüche, dadurch gekennzeichnet, daß jeder Anfrage (R1-R3, Rn) innerhalb der Anfragenliste (L) ein Graphikelement (E1-E3, En) zugeordnet ist, und daß jede Zuklapp- und Aufklappetappe aktiviert wird, indem durch Auswahlmittel (M) innerhalb des Terminals (T) das der betreffenden Anfrage zugeordnete Graphikelement angeklickt wird.

4. Verfahren nach einem der vorhergehenden Ansprüche, dadurch gekennzeichnet, daß die Zuklapp- und Aufklappetappen on line während der Abfrageperiode durchgeführt werden können, wobei die Anfragenliste permanent aktualisiert wird.

5. Verfahren nach einem der vorhergehenden Ansprüche, dadurch gekennzeichnet, daß die Zuklapp- und Aufklappetappen off line nach einer Abfrageperiode durchgeführt werden können.

6. Verfahren nach einem der vorhergehenden Ansprüche, das bei einer Abfrageperiode eingesetzt wird, bei der Informationen (A), die von dem Server (S1, SN) als Antwort auf eine Anfrage (Ra) erhalten wurden, in einer Gesamtheit von Antworten (Aa1, Aa2, Aan) organisiert sind, dadurch gekennzeichnet, daß es ferner bei dem Erhalt der Gesamtheit von Antworten (Aa1, Aa2, Aan) Etappen zur Erfassung der Indentifikationselemente (Ia1, Ia2, Ian) für jede Antwort auf diese Anfrage, Etappen für die Eintragung in die Anfragenliste (L') der auf diese Weise erfaßten Identifikationselemente (Ia1, Ia2, Ian) im Anschluß an diese Anfrage (Ra) umfaßt, daß es ferner Unteretappen zum Aufklappen (DLa), um durch ihr Identifikationselement (Ia2) eine Antwort (Aa2) in der Gesamtheit von Antworten auf diese Anfrage (Ra) auszuwählen, um die in dieser Antwort (Aa2) enthaltenen Informationen zu konsultieren, wobei diese Informationen in das Konsultationsfenster (F'a) im Anschluß an das ausgewählte Identifikationselement (Ia2) eingesetzt werden, und Unteretappen zum Zuklappen umfaßt, um durch ihr Identifikationselement (Ia2) eine Antwort auszuwählen, die vorher Gegenstand einer Aufklappetappe (DLa) war, um in dem Konsultationsfenster (F'a) die Anzeige der Informationen zu verdecken, die der ausgewählten Antwort entspricht.

7. Verfahren nach einem der vorhergehenden Ansprüche, dadurch gekennzeichnet, daß die Anfragenliste (L), die in dem Konsultationsfenster (F1) angezeigt wird, ferner für mindestens eine dieser Anfragen (R1-R3, Rn) Zusatzinformationen (CI1-CI3, CIn) enthält, die sich auf die Ausführung dieser Anfrage beziehen.

8. Verfahren nach einem der vorhergehenden Ansprüche, angewandt bei einer Abfrageperiode, die durch Ausführung einer Abfolge (SR) von Anfragen (R1, R2, RN), die vorher off line erfaßt und gespeichert wurden, durchgeführt wird, wobei diese Abfolge (SR) von Anfragen (R1, R2, RN) in dem Konsultationsfenster (Fs) angezeigt wird, dadurch gekennzeichnet, daß es ferner während der Online-Bearbeitung jeder Anfrage (Ri) durch den Server, eine progressive Anzeige der Antwortinformationen (Ai) auf die Anfrage (Ri) in dem Konsultationsfenster (Fs) im Zuge deren Erhalts durch das Terminal (T) umfaßt.

9. Verfahren nach Anspruch 8, ferner bestehend aus Etappen, um jeder Anfrage während der Bearbeitung (Ri) ein Bearbeitungsfenster (Fti) zuzuordnen, das Informationen über die laufende Bearbeitung enthält, dadurch gekennzeichnet, daß das Bearbeitungsfenster (Fti) ferner mindestens ein Graphikverfügbarkeitselement (ED) umfaßt, das anzeigt, ob eine nachfolgende Anfrage entsandt werden kann.

10. Terminal (T), das über ein Kommunikationsnetz (K) mit mindestens einem Server (S1, SN) verbunden ist, der das Verfahren nach einem der vorhergehenden Ansprüche einsetzt, wobei dieses Terminal (T) besteht aus:
- Mitteln zum Erfassen und kumulativen Speichern des Informationsaustausches zwischen dem Server (S1, SN) und dem Terminal (T), wobei dieser Informationsaustausch von dem Server (S1, SN) entsandte und von dem Terminal (T) empfangene Aufforderungsmeldungen (P1-P3; Pa, Pb; Ps1, Psn), von einem Benutzer dieses Terminals (T) formulierte Anfragen (R1-R4, RN, Rn, Ra, Rb) als Antwort auf den Erhalt einer Aufforderungsmeldung (P1-P3; Pa, Pb; Ps1, Psn), von dem Server (S1, SN) übertragene Informationen (A1-A3, An, Aa1, Aa2, Aan) als Antwort auf eine Anfrage umfaßt:
- Mitteln zur Identifizierung und selektiven Speicherung der von dem Terminal (T) entsandten Anfragen (R1-R4, RN, Rn, Ra, Rb),
- Mitteln zur Erstellung und Anzeige in einem Konsultationsfenster (FC, FCa, FCb, FCc, FCd, FCe, F1, F2, FC, FC') einer Liste von Anfragen, die selektiv während der Periode gespeichert wurden, dadurch gekennzeichnet, daß es ferner umfaßt:
- sogenannte Aufklappmittel, um auf Initiative des Benutzers eine Anfrage (R1, R2) in der Anfragenliste auszuwählen, um die als Antwort auf diese Anfrage erhaltenen Informationen zu konsultieren, die mit Mitteln zum Anzeigen der gespeicherten Informationen (A1) in dem Konsultationsfenster (FCb) im Anschluß an die Anfrage (R1) zusammenwirken, welche als Antwort auf die Anfrage (R1) erhalten wurden, und
- sogenannte Zuklappmittel, um auf Initiative des Benutzers eine Anfrage auszuwählen, die durch die Aufklappmittel ausgewählt wurde, um in dem Konsultationsfenster (FCd, FCe) die Anzeige der Informationen (A1, A2), die der ausgewählten Anfrage (R1, R2) entsprechen, abzudecken,
und daß die Mittel zur Identifizierung und selektiven Speicherung umfassen:
- Mittel zur Erfassung und Analyse jeder Aufforderungsmeldung (P1-P3; Pa, Pb; Ps1, Psn), die von einem Server (S1, SN) kommt, und
- Mittel zur selektiven Speicherung der von dem Benutzer des Terminals (T) ausgearbeiteten Anfragen (R1-R4, RN, Rn, Ra, Rb) als Antwort auf jede erfaßte Aufforderungsmeldung (P1-P3; Pa, Pb; Ps1, Psn).

11. Terminal (T) nach Anspruch 10, dadurch gekennzeichnet, daß die Mittel zur Kontrolle und Bearbeitung (US) und die Mittel der Graphikschnittstelle (IG) zusammenwirken, um jeder Anfrage (R1-R3, Rn) in der Anfragenliste (L) ein Graphikelement (E1-E3, En) zuzuordnen, und daß die Auswahlmittel (MP) mit den Mitteln zur Kontrolle und Bearbeitung (UC), den Speichermitteln (MS) und den Mitteln der Graphikschnittstelle (IG) zusammenwirken, um eine Anfrage (R2) mit ihrem zugeordneten Graphikelement (E2) auszuwählen und um die als Antwort auf diese Anfrage (R2) erhaltenen Informationen (A2) anzuzeigen.

12. Terminal (T) nach einem der Ansprüche 10 oder 11, das bei einer Abfrageperiode eingesetzt wird, bei der von dem Server als Antwort auf eine Anfrage (Ra) erhaltene Informationen (A) eine Gesamtheit von Antworten (Aa1, Aa2, Aan) umfassen, dadurch gekennzeichnet, daß die Mittel zur Kontrolle und Bearbeitung (UC) derart angeordnet sind, daß sie für jede Antwort (Aa1, Aa2, Aan) auf die Anfrage (Ra) Identifikationselemente (Ia1, Ia2, Ian) erfassen, und daß sie mit den Mitteln der Graphikschnittstelle (IG) zusammenwirken, um in die Anfragenliste (L') im Anschluß an die Anfrage (Ra) die erfaßten Identifikationselemente (Ia1, Ia2, Ian) einzusetzen.

13. Terminal (T) nach Anspruch 12, dadurch gekennzeichnet, daß die Auswahlmittel (MP) mit den Mitteln zur Kontrolle und Bearbeitung (UC), den Speichermitteln (MS) und den Mitteln der Graphikschnittstelle (IG) zusammenwirken, um durch ihr Identifikationselement (Ia2) eine Antwort (Aa2) unter der Gesamtheit (A) von Antworten (Aa1, Aa2, Aan) auf diese Anfrage (Ra) auszuwählen, um die in dieser Antwort enthaltenen Informationen zu konsultieren, wobei diese Informationen in das Konsultationsfenster (F') im Anschluß an das ausgewählte Identifikationselement (Ia2) eingesetzt werden.

14. Terminal (T) nach Anspruch 13, dadurch gekennzeichnet, daß die Auswahlmittel (MP) mit den Mitteln zur Kontrolle und Bearbeitung (UC), den Speichermitteln (MS) und den Mitteln der Graphikschnittstelle (IG) zusammenwirken, um durch ihr Identifikationselement (Ia2) eine Anwort (Aa2) auszuwählen, die vorher Gegenstand einer Aufklappetappe (DLa) war, um in dem Konsultationsfenster (F') die Anzeige der Informationen, die dieser ausgewählten Antwort (Aa2) entsprechen, zu unterdrücken.

15. Terminal (T) nach Anspruch 14, wobei die Mittel zur Kontrolle und Bearbeitung (UC), die Kommunikationsmittel (MO) und die Speichermittel (MS) derart angeordnet sind, daß sie eine verzögerte Übertragung einer Abfolge (SR) von Anfragen (R1, R2, RN), die vorher off line erfaßt und gespeichert wurden, ermöglichen, dadurch gekennzeichnet, daß die Mittel der Graphikschnittstelle (IG), die Kommunikationsmittel (MO) und die Mittel zur Kontrolle und Bearbeitung zusammenwirken, um während der Online-Bearbeitung jeder Anfrage (Ri) durch den Server eine progressive Anzeige der Antwortinformationen (Ai) auf diese Anfrage (Ri) in dem Konsultationsfenster (Fs) im Zuge deren Erhalts durch das Terminal (T) zu liefern.

16. Terminal (T) nach Anspruch 15, wobei die Mittel der Graphikschnittstelle (IG) mit den Mitteln zur Kontrolle und Bearbeitung (UC) zusammenwirken, um ein Bearbeitungsfenster (FTi) zu liefern, das Informationen über die Bearbeitung einer laufenden Anfrage (Ri) enthält, dadurch gekennzeichnet, daß die Mittel zur Kontrolle und Bearbeitung (UC) und die Mittel der Graphikschnittstelle (IG) zusammenwirken, um in diesem Bearbeitungsfenster (FTi) ein Graphikverfügbarkeitselement (ED) zu liefern, das anzeigt, ob eine nachfolgende Anfrage entsandt werden kann.
